# EUROPÄISCHE PATENTANMELDUNG

(11) **EP 3 045 993 A1**
(43) Veröffentlichungstag der Anmeldung: **20.07.2016**
(21) Anmeldenummer: 15151294.4
(22) Anmeldetag: 15.01.2015
(51) Int. Cl.: G05B 19/4093

(54) **Fertigungssystem mit zusätzlicher Funktionalität und Betriebsverfahren**

(71) Anmelder: Siemens Aktiengesellschaft, 80333 München (DE)
(72) Erfinder: Rosenbaum, Björn, 91056 Erlangen (DE)

(57) **Zusammenfassung**

Die Qualität von Fertigungssystemen soll verbessert werden. Dazu wird ein Fertigungssystem mit einer Fertigungsmaschine (1) und einer Steuerungsvorrichtung (2) zum Erzeugen spezifischer Steuerungsbefehle für die Fertigungsmaschine auf der Grundlage von Fertigungsdaten vorgeschlagen. Die Steuerungsvorrichtung (2) besitzt eine Analyseeinrichtung (7), die dazu ausgebildet ist, anhand eines vorgegebenen Qualitätskriteriums zu entscheiden, ob eine in die Steuerungsvorrichtung (2) bereits integrierte, aktivierte Funktionalität zur Übersetzung der Fertigungsdaten in die spezifischen Steuerungsbefehle verwendet wird oder eine alternative Funktionalität, die in einer Datenbank (8) außerhalb der Steuerungsvorrichtung (2) oder in nicht aktivierter Form in der Steuerungsvorrichtung (2) bereitgestellt wird.

## Beschreibung

Die vorliegende Erfindung betrifft ein Fertigungssystem mit einer Fertigungsmaschine und einer Steuerungsvorrichtung zum Erzeugen spezifischer Steuerungsbefehle für die Fertigungsmaschine auf der Grundlage von Fertigungsdaten. Darüber hinaus betrifft die vorliegende Erfindung ein Verfahren zum Betreiben eines solchen Fertigungssystems.

Unter dem Begriff "Fertigungsmaschine" wird hier jede Maschine verstanden, die einen Fertigungs- oder Produktionsprozess selbständig ausführt oder zumindest in einen solchen eingebunden ist. Ein typisches Beispiel einer solchen Fertigungsmaschine wäre eine Werkzeugmaschine, mit der Werkstücke mit Hilfe eines oder mehrerer Werkzeuge bearbeitet werden. Darunter ist beispielsweise eine Drehmaschine, eine Fräsmaschine oder dergleichen zu verstehen.

Darüber hinaus können sich Fertigungsmaschinen auch auf Maschinen beziehen, welche lediglich automatisiert Bewegungen ausführen. Darunter fallen beispielsweise Roboter, die mechanische Arbeit leisten und von Steuerungsprogrammen gesteuert werden. Ebenso können Anlagen, welche einen Verbund von mehreren Geräten darstellen, als Fertigungsmaschine gesehen werden. Auch solche Anlagen werden typischerweise mit Steuerungsprogrammen gesteuert, um z. B. automatisiert eine Fertigung vorzunehmen.

Die Qualität, Funktionalität und Leistungsfähigkeit von Fertigungssystemen wird zunehmend durch ihre Steuerungs-Software bestimmt. Obwohl Software in immer kürzeren Entwicklungszyklen neu- bzw. weiterentwickelt wird, können Maschinen heute davon oft keinen erweiterten Nutzen ziehen.

Viele Fertigungsmaschinen sind sogenannte "CNC-Maschinen" (Computerized Numerical Control). Diese Maschinen werden durch ein Maschinenprogramm bzw. CNC-Programm gesteuert. Derartige Maschinenprogramme sind in der Regel herstellerspezifisch.

Der Entwurf von Werkstücken erfolgt typischerweise mit Hilfe von CAD-Programmen. CAM-Systeme zur rechnergestützten Fertigung wandeln die Daten eines CAD-Entwurfs unter Berücksichtigung spezifischer Werkzeuge, Drehzahlen, Vorschübe und dergleichen in CNC-Programme. In der Regel ist noch ein Postprozessor notwendig, um ein solches CNC-Programm in die spezifische Form zu bringen, die eine konkrete Fertigungsmaschine benötigt.

Eine Fertigungsmaschine besitzt also beispielsweise eine interne CNC-Steuerung. Wie oben bereits angedeutet wurde, erhält die Werkzeug- bzw. Fertigungsmaschine darüber hinaus ihre Steuerungsbefehle von einer Steuerungsvorrichtung außerhalb der Fertigungsmaschine. Bei Werkzeugmaschinen umfasst diese Steuerungsvorrichtung typischerweise ein CAD-System, ein CAM-System und gegebenenfalls einen Postprozessor. Die Fertigungsmaschine bildet dann zusammen mit der Steuerungsvorrichtung ein Fertigungssystem.

Ein solches Fertigungssystem unterliegt ständigen Änderungen. Zum einen wird die Steuerung der Fertigungsmaschine (z. B. CNC-Steuerung) fortlaufend aktualisiert. Darüber hinaus werden auch die computergestützten Systeme in der Arbeitsvorbereitung immer wieder verbessert und auf den aktuellsten Stand gebracht. Darüber hinaus werden die einzelnen Systeme vielfach individuell an die einzelnen Kunden angepasst. Dabei werden die einzelnen Systeme mit der jeweils passenden Software versehen. In diesem Rahmen ist es auch möglich, dass einzelne Softwarekomponenten anwenderspezifisch freigeschaltet werden. All diese Möglichkeiten an Updates und Upgrades machen es nur mit hohem Aufwand möglich, optimale Prozessergebnisse zu erzielen. Gerade in der Arbeitsvorbereitung (Steuerung und Datenverarbeitung vor der Fertigungsmaschine) wäre eine Optimierung der Zusammenarbeit der einzelnen Systeme wünschenswert. So könnte ein aufwendiges Anpassen von CAM und Postprozessor an die jeweiligen Maschinen vermieden werden.

Die Aufgabe der vorliegenden Erfindung besteht somit darin, ein Fertigungssystem bereitzustellen, mit dem eine verbesserte Fertigungsqualität erzielt werden kann. Darüber hinaus soll ein entsprechendes Verfahren bereitgestellt werden.

Erfindungsgemäß wird diese Aufgabe gelöst durch ein Fertigungssystem mit
- einer Fertigungsmaschine und
- einer Steuerungsvorrichtung zum Erzeugen spezifischer Steuerungsbefehle für die Fertigungsmaschine auf der Grundlage von Fertigungsdaten, wobei
- die Steuerungsvorrichtung eine Analyseeinrichtung aufweist, die dazu ausgebildet ist, anhand eines vorgegebenen Qualitätskriteriums zu entscheiden, ob eine in die Steuerungsvorrichtung bereits integrierte, aktivierte Funktionalität zur Übersetzung der Fertigungsdaten in die spezifischen Steuerungsbefehle verwendet wird oder eine alternative Funktionalität, die in einer Datenbank außerhalb der Steuerungsvorrichtung oder in nicht aktivierter Form in der Steuerungsvorrichtung bereitgestellt wird.

Darüber hinaus wird erfindungsgemäß bereitgestellt ein Verfahren zum Betreiben eines Fertigungssystems, welches eine Fertigungsmaschine und eine Steuerungsvorrichtung zum Erzeugen spezifischer Steuerungsbefehle für die Fertigungsmaschine auf der Grundlage von Fertigungsdaten aufweist, durch
- Übersetzen der Fertigungsdaten in die spezifischen Steuerungsbefehle, und
- Entscheiden anhand eines vorgegebenen Qualitätskriteriums, ob eine in die Steuerungsvorrichtung bereits integrierte, aktivierte Funktionalität zu dem Übersetzen der Fertigungsdaten in die spezifischen Steuerungsbefehle verwendet wird oder eine alternative Funktionalität, die in einer Datenbank außerhalb der Steuerungsvorrichtung oder in nicht aktivierter Form in der Steuerungsvorrichtung bereitgestellt wird.

In vorteilhafter Weise wird also durch die Steuerungsvorrichtung, die zur sogenannten Arbeitsvorbereitung zählt und bei Werkzeugmaschinen typischerweise als CAM-Vorrichtung ausgebildet ist, überprüft, ob durch das Fertigungssystem nicht eine bessere Qualität erzielt werden kann. Dies wird dadurch realisiert, dass überprüft wird, ob die von der Steuerungsvorrichtung ausgegebenen Steuerungsbefehle für die Fertigungsmaschine nicht durch bessere Steuerungsbefehle ersetzt werden könnten.

Dazu wird überprüft, ob das Übersetzen der Fertigungsdaten in die Steuerungsbefehle (z. B. Übersetzung von CAD-Daten in CAM-Output) nicht optimiert werden kann. Dies ist beispielsweise dann der Fall, wenn eine entsprechende Funktionalität vom Hersteller der Steuerungsvorrichtung aktualisiert, verbessert oder beschleunigt wurde. Alternativ oder zusätzlich kann dabei auch überprüft werden, ob nicht eine höhere Qualität dadurch zu erreichen ist, dass eine andere oder zusätzliche Funktionalität freigeschaltet wird. So könnte beispielsweise eine zusätzliche Funktionalität dafür freigeschaltet werden, dass eine höhere Oberflächenqualität erzielt werden kann.

Vorzugsweise handelt es sich bei der Fertigungsmaschine um eine Werkzeugmaschine. In diesem Fall liefert die Steuerungsvorrichtung beispielsweise Werkzeugwege als Steuerungsbefehle an die Werkzeugmaschine. Gegebenenfalls lassen sich dann solche Werkzeugmaschinen beispielsweise durch Plug&Play für Herstellungszwecke optimieren. Dies wäre besonders vorteilhaft beispielsweise für Fräsmaschinen und Drehmaschinen. Insbesondere bei Kleinserienfertigungen lassen sich so verhältnismäßig rasch Optimierungen im Fertigungsprozess realisieren.

Das vorgegebene Qualitätskriterium kann sich auf die Fertigungsgenauigkeit beziehen. So kann es wünschenswert sein, die Rauheit einer Oberfläche zu reduzieren und diesbezüglich entsprechende Funktionalitäten für die Steuerungsvorrichtung vorzusehen. Die Fertigungsgenauigkeit kann aber auch dadurch verbessert werden, dass Toleranzen reduziert werden. Auch hierfür können gegebenenfalls alternative Funktionalitäten bereitstehen, die es für den jeweiligen Einsatz zu nutzen gilt.

Das vorgegebene Qualitätskriterium kann sich aber auch auf die Fertigungsgeschwindigkeit beziehen. Auch die Fertigungsgeschwindigkeit ist ein wesentlicher Prozessparameter, der stets einer Optimierung unterliegt. So ist es natürlich von Vorteil, wenn die Achsen einer Werkzeugmaschine bei Leerfahrten schneller bewegt werden können. Auch können neue Werkzeuge eine Optimierung der Fertigungsgeschwindigkeit erlauben, so dass dann unter Umständen zu einem neuen Werkzeug eine zusätzliche Funktionalität installiert werden sollte, um die Fertigungsgeschwindigkeit zu steigern.

In einer Ausgestaltung kann die Steuerungsvorrichtung dazu ausgelegt sein, eine Steuerungsdatei für die alternative Funktionalität zu speichern und für das Übersetzen bereitzustellen. Dies hat den Vorteil, dass eine jeweilige Steuerungsdatei in der Steuerungsvorrichtung abgelegt werden kann und die Steuerungsvorrichtung damit nicht auf einen aufwendigen Datenaustausch beispielsweise mit einer externen Datenbank angewiesen ist.

In einer Weiterführung ist die Steuerungsvorrichtung dazu ausgelegt, die alternative Funktionalität nur vorübergehend bereitzustellen. Dies bedeutet, dass die alternative Funktionalität, also diejenige, die noch nicht von Anfang an in der Steuerungsvorrichtung bereitstand oder aktiviert war, definiert aktiviert und deaktiviert wird. Unter das Aktivieren fällt hier auch der Fall, dass die entsprechende Datei abgespeichert und zur Verfügung gestellt wird. Alternativ kann natürlich auch eine bereits abgespeicherte Datei allein durch Setzen beispielsweise eines Aktivierungsbits aktiviert bzw. zur Verfügung gestellt werden. Beim entsprechenden Deaktivieren wird dann das Aktivierungsbit wieder zurückgesetzt. Als Deaktivieren kann aber auch der Vorgang bezeichnet werden, bei dem eine Funktionalität bzw. deren Datei gelöscht oder deinstalliert wird.

Bei einem Ausführungsbeispiel ist die Steuerungsvorrichtung dazu ausgelegt, die alternative Funktionalität für eine vorbestimmte Zeitdauer bereitzustellen. Dies bedeutet, dass die alternative Funktionalität dann für diese vorbestimmte Zeitdauer aktiviert oder überhaupt vorhanden ist. Außerhalb dieser Zeitdauer ist diese alternative Funktionalität für die Steuerungsvorrichtung nicht verfügbar. Somit kann beispielsweise eine zeitlich beschränkte Lizenz für eine konkrete Funktionalität erteilt werden.

Gemäß einer anderen Ausführungsvariante kann die Steuerungsvorrichtung dazu ausgelegt sein, die alternative Funktionalität für eine vorbestimmte Anzahl an Nutzzyklen bereitzustellen. Dabei ist ein Nutzzyklus dadurch definiert, dass die jeweilige Funktionalität bzw. deren Ergebnis genutzt wird. So kann beispielsweise die Anzahl begrenzt werden, wie oft Fertigungsdaten mit der jeweiligen Funktionalität in Steuerungsbefehle übersetzt werden. Alternativ kann auch die Anzahl begrenzt werden, wie oft die Fertigungsmaschine einen Fertigungsprozess ausführen darf. Dabei kann ein Fertigungsprozess darin bestehen, genau ein Produkt herzustellen, aber auch darin, eine Charge von Produkten herzustellen.

Die oben angeführten Merkmale zur Weiterbildung des erfindungsgemäßen Fertigungssystems können auch zur Weiterbildung des erfindungsgemäßen Verfahrens verwendet werden. Die jeweils dargestellten funktionellen Merkmale sind dann als Verfahrensschritte zu interpretieren.

Die vorliegende Erfindung wird nun anhand der beigefügten Zeichnungen näher erläutert, in denen zeigen:
- FIG 1: ein Blockschaltdiagramm über den prinzipiellen Aufbau eines Fertigungssystems und
- FIG 2: ein Ablaufdiagramm eines erfindungsgemäßen Verfahrens.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder in anderen technisch sinnvollen Kombinationen realisiert werden können.

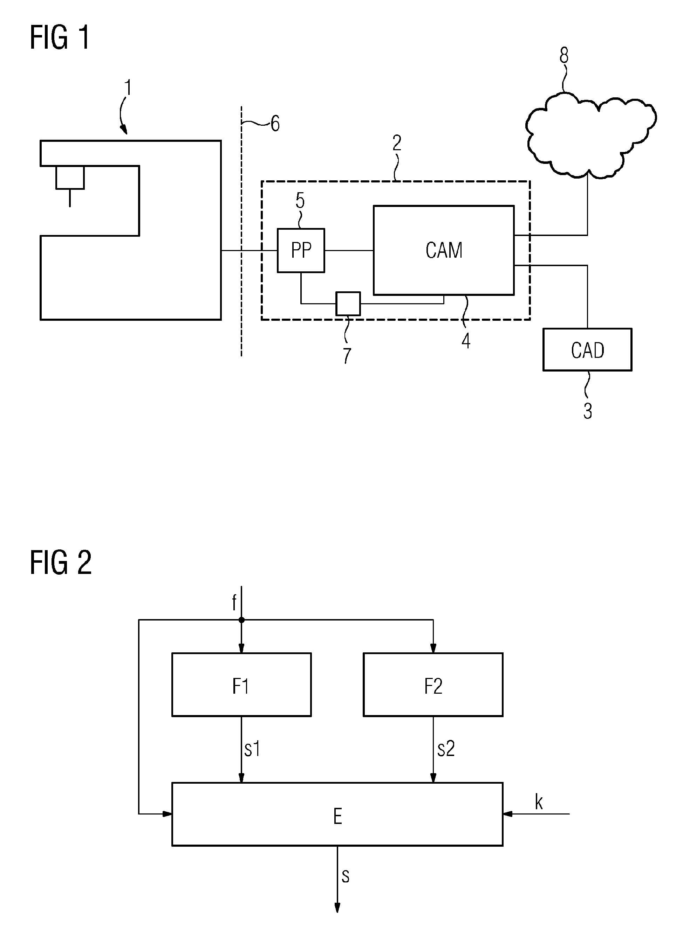

FIG 1 gibt den prinzipiellen Aufbau eines Fertigungssystems beispielhaft wieder. Dieses exemplarische Fertigungssystem besitzt als Fertigungsmaschine beispielsweise eine Fräsmaschine 1. Darüber hinaus besitzt es eine Steuerungsvorrichtung 2 zum Erzeugen spezifischer Steuerungsbefehle für die Fertigungsmaschine auf der Grundlage von Fertigungsdaten. Derartige Fertigungsdaten erhält die Steuerungsvorrichtung beispielsweise von einem Grafikprogramm, z. B. einem CAD-System 3.

Als Fertigungsmaschine 1 ist in dem Beispiel von FIG 1 zwar eine Fräsmaschine gewählt, es kann sich dabei aber auch um jede andere Werkzeugmaschine, wie beispielsweise eine Drehmaschine, Bohrmaschine und dergleichen handeln. Darüber hinaus kann die Fertigungsmaschine aber auch jede andere Maschine handeln, mit der Produkte gefertigt werden können. So kann es sich beispielsweise auch um eine Spritzgussmaschine, einen Roboter (z. B. Schweißroboter) oder eine sonstige Maschine zum Fertigen oder Handhaben von Werkstücken handeln.

Eine solche Fertigungsmaschine 1 besitzt einen Dateneingang, über den Fertigungsdaten zu einer maschineninternen Steuerung (bei Werkzeugmaschinen spricht man dabei häufig von einer CNC-Steuerung) übertragen werden können. Diese Fertigungsdaten repräsentieren beispielsweise Werkzeugwege und sie dienen zur Steuerung der Achsen der Maschine. Die Steuerungsvorrichtung 2 bereitet die Grafikdaten des hier beispielhaft gewählten CAD-Systems 3 so auf, dass an seinem Ausgang beispielsweise Werkzeugwege für die CNC-Steuerung zur Verfügung stehen. Die entsprechende Umsetzung wird beispielsweise durch ein CAM-System 4 der Steuerungsvorrichtung 2 durchgeführt. Die Ausgangsdaten von standardisierten CAM-Systemen sind vielfach nicht geeignet, eine Fertigungsmaschine 1 direkt anzusteuern. Daher besitzt die Steuerungsvorrichtung 2 gegebenenfalls noch einen sogenannten Postprozessor 5, der in der Lage ist, standardisierte bzw. übliche Ausgangsdatensätze eines CAM-Systems 4 in maschinenspezifische Datensätze zu wandeln.

In FIG 1 ist zwischen der Fertigungsmaschine 1 und der Steuerungsvorrichtung 2 eine Trennlinie 6 eingezeichnet. Sie symbolisiert die Trennung zwischen der eigentlich arbeitenden Fertigungsmaschine 1 einerseits und der Arbeitsvorbereitung andererseits. Die Steuerungsvorrichtung 2 und insbesondere das CAM-System 4 sowie der Postprozessor 5 sind der Arbeitsvorbereitung zuzurechnen.

Die Steuerungsvorrichtung 2 besitzt also die erwähnte integrierte Funktionalität, um die Fertigungsdaten beispielsweise von dem CAD-System 3 in ein Maschinenprogramm umzusetzen, mit welchem die Fertigungsmaschine 1 direkt gesteuert wird. Mit dieser integrierten Funktionalität kann das System beispielsweise eine Fläche oder eine Kontur mit einer bestimmten Qualität herstellen. Für eine neue Charge an Produkten will der Nutzer nun beispielsweise die Oberflächenqualität verbessern. Er weiß beispielsweise, dass die Fertigungsmaschine 1 eine solche erhöhte Oberflächenqualität prinzipiell erreichen könnte. Mit der eingesetzten integrierten Funktionalität zur Übersetzung der Fertigungsdaten in die spezifischen Steuerungsbefehle für die Fertigungsmaschine 1 kann diese hohe Qualität jedoch nicht erreicht werden. Daher besteht für den Nutzer gegebenenfalls die Möglichkeit, eine alternative Funktionalität in der Steuerungsvorrichtung 2 freizuschalten, so dass die höhere Oberflächenqualität erreicht wird. Während die erstgenannte, integrierte Funktionalität aktiviert ist und tatsächlich eingesetzt wird, ist die zweitgenannte, alternative Funktionalität (noch) nicht aktiviert.

Die Steuerungsvorrichtung 2 besitzt nun eine Analyseeinrichtung 7, mit der die integrierte Funktionalität mit der alternativen Funktionalität verglichen werden kann. Vergleichskriterium ist ein vorgegebenes Qualitätskriterium. Dieses Qualitätskriterium kann beispielsweise die Rauheit, die Genauigkeit, die Toleranz oder die Fertigungsgeschwindigkeit sein. Stellt die Analyseeinrichtung 7 fest, dass das Qualitätskriterium mit der integrierten Funktionalität nicht erreicht wird, mit der alternativen Funktionalität jedoch schon, so implementiert die Steuerungsvorrichtung die alternative Funktionalität gegebenenfalls voll automatisch, gegebenenfalls auch teilautomatisch.

In einer Ausführungsform sind bereits mehrere Funktionalitäten zur Übersetzung der Fertigungsdaten in die spezifischen Steuerungsbefehle in der Steuerungsvorrichtung 2 abgelegt. Für einen bestimmten Typ des Fertigungssystems ist dann eine dieser Funktionalitäten aktiviert. Soll nun die alternative Funktionalität aktiviert bzw. freigeschaltet werden, so muss beispielsweise ein entsprechendes Aktivierungsbit gesetzt und das Aktivierungsbit der ursprünglichen Funktionalität zurückgesetzt werden. Dies bedeutet, dass die eine Funktionalität deaktiviert und die andere Funktionalität aktiviert wird. Die Aktivierung einer Funktionalität ist beispielsweise nur dann möglich, wenn eine entsprechende Lizenz vorliegt. Diese kann z. B. vom Hersteller kostenpflichtig erworben werden. Der Nutzer erhält dann mit der Lizenz beispielsweise einen Aktivierungscode, mit dem er die alternative Funktionalität freischalten kann.

Alternativ kann sich die Steuerungsvorrichtung 2 auch automatisch in einer externen Datenbank, z. B. im Internet, "erkundigen", welche Funktionalitäten anstelle der integrierten Funktionalität zur Verfügung stehen, um das vorgegebene Qualitätskriterium zu erfüllen. Die Analyseeinrichtung 7 kann dann wieder entscheiden, ob die integrierte Funktionalität oder die alternative Funktionalität aus dem Internet 8 verwendet werden soll. Die Entscheidung kann wie auch bei der ersten Ausführungsform dadurch getroffen werden, dass die integrierte Funktion verwendet wird, wenn das Qualitätskriterium erfüllt ist. Dann ist es nicht notwendig, die alternative Funktionalität zu aktivieren bzw. herunterzuladen oder dergleichen. Wenn das Qualitätskriterium durch die integrierte Funktionalität nicht erreicht wird, aber durch die alternative Funktionalität, so wird diese heruntergeladen bzw. aktiviert und verwendet. Gemäß einem anderen Entscheidungsalogrithmus wird die integrierte Funktionalität mit der alternativen Funktionalität, die noch nicht heruntergeladen oder aktiviert ist, unmittelbar verglichen, und diejenige der beiden Funktionalitäten, die hinsichtlich des vorgegebenen Qualitätskriteriums das bessere Ergebnis liefert, wird verwendet.

Die hier angesprochenen Funktionalitäten können nicht nur Übersetzungsalgorithmen zum Übersetzen von Fertigungsdaten in spezifische Steuerungsbefehle umfassen, sondern auch zusätzliche Informationen, z. B. vom Hersteller (OEM-Informationen). Diese Informationen betreffen beispielsweise Optimierungen bisheriger Systeme. So kann beispielsweise eine alternative Funktionalität durch eine integrierte Funktionalität zusammen mit einer Zusatzinformation vom OEM gebildet werden.

FIG 2 zeigt ein Ausführungsbeispiel eines erfindungsgemäßen Betriebsverfahrens für ein Fertigungssystem, welches eine Fertigungsmaschine und eine Steuerungsvorrichtung zum Erzeugen spezifischer Steuerungsbefehle für die Fertigungsmaschine auf der Grundlage von Fertigungsdaten aufweist. Die Fertigungsdaten f werden zwei Funktionalitäten bzw. Übersetzungsblöcken F1 und F2 zugeführt. Der Übersetzungsblock F1 realisiert die integrierte, aktivierte Funktionalität zur Übersetzung der Fertigungsdaten f in spezifische Steuerungsbefehle s1. Der parallele Übersetzungsblock F2 realisiert die alternative Funktionalität zur Übersetzung der Fertigungsdaten f in spezifische Steuerungsbefehle s2. Ein nachgeschalteter Entscheidungsblock E entscheidet nun, welche der Steuerungsbefehle s1 oder s2 als tatsächlich zu verwendende Steuerbefehle s einzusetzen sind. Für die Entscheidung verwendet der Entscheidungsblock E ein vorgegebenen Qualitätskriterium k. Gegebenenfalls werden für die Entscheidung auch die Fertigungsdaten f herangezogen. Hinsichtlich der weiteren Details wird auf die funktionellen Zusammenhänge aus dem Ausführungsbeispiel von FIG 1 hingewiesen.

Wird festgestellt, dass mit der integrierten Funktionalität F1 das Qualitätskriterium k bereits erreicht wird, kann auf die weitere Übersetzung gemäß der Funktionalität F2 verzichtet werden. Letztere muss dann nicht aktiviert oder heruntergeladen werden. Es werden die Steuerbefehle s1 als die tatsächlich zu verwendenden Steuerbefehle s eingesetzt.

Falls mit der integrierten Funktionalität F1 das Qualitätskriterium k nicht erreicht wird, aber mit der alternativen Funktionalität F2, so werden die Steuerbefehle s2 als tatsächlich zu verwendende Steuerbefehle s eingesetzt.

Die Entscheidung im Entscheidungsblock E kann aber auch danach getroffen werden, welche der beiden Funktionalitäten F1 und F2 das vorgegebenen Qualitätskriterium k besser erfüllt. Die entsprechenden Steuerbefehle werden dann tatsächlich verwendet.

Nachfolgend werden sehr konkrete Realisierungsformen kurz dargestellt. So kann beispielsweise mit Zugang zu Online-Datenbanken sowie Informationen zum verwendeten CNC-Softwarestand inklusive zusätzlicher OEM-Informationen das CAM-System selbsttätig erkennen, dass zum Beispiel Bearbeitungszyklen (z. B. für Flächen, Kanten, Taschen etc.) nicht auf dem aktuellsten Stand sind oder mit einer Zusatzoption (z. B. Spline-Interpolation) die Bearbeitung noch effektiver gestaltet werden kann. Mit geringem Aufwand kann so in der Arbeitsvorbereitung das beste Ergebnis in einer durchgängigen Prozesskette erzielt werden. Insbesondere können so die aktuellsten Bearbeitungszyklen (einschließlich etwaiger OEM-Informationen) und die effektivsten CNC-Funktionen verwendet werden.

Besonders vorteilhaft ist, wenn das CAM-System an eine Datenbank angebunden ist, so dass sie Versionsprüfungen, Optionsprüfungen etc. auf der Basis der Informationen zum CNC-Softwarestand der Maschine, einem OEM-Zyklenstand etc. durchgeführt und dieses Wissen an den CAM-Bediener weitergegeben werden kann. Die Prozesskette ist somit stets auf dem neuesten Stand und bietet effektivste Fertigungsmöglichkeiten.

## Patentansprüche

1. Fertigungssystem mit
- einer Fertigungsmaschine (1) und
- einer Steuerungsvorrichtung zum Erzeugen spezifischer Steuerungsbefehle für die Fertigungsmaschine (1) auf der Grundlage von Fertigungsdaten,
**dadurch gekennzeichnet, dass**
- eine Steuerungsvorrichtung (2) eine Analyseeinrichtung (7) aufweist, die dazu ausgebildet ist, anhand eines vorgegebenen Qualitätskriteriums zu entscheiden, ob eine in die Steuerungsvorrichtung (2) bereits integrierte, aktivierte Funktionalität zur Übersetzung der Fertigungsdaten in die spezifischen Steuerungsbefehle verwendet wird oder eine alternative Funktionalität, die in einer Datenbank (8) außerhalb der Steuerungsvorrichtung (2) oder in nicht aktivierter Form in der Steuerungsvorrichtung (2) bereitgestellt wird.

2. Fertigungssystem nach Anspruch 1, wobei die Fertigungsmaschine (1) eine Werkzeugmaschine ist.

3. Fertigungssystem nach Anspruch 2, wobei die Steuerungsbefehle Werkzeugwege der Werkzeugmaschine beinhalten.

4. Fertigungssystem nach einem der vorhergehenden Ansprüche, wobei sich das vorgegebene Qualitätskriterium auf eine Fertigungsgenauigkeit bezieht.

5. Fertigungssystem nach einem der vorhergehenden Ansprüche, wobei sich das vorgegebene Qualitätskriterium auf eine Fertigungsgeschwindigkeit bezieht.

6. Fertigungssystem nach einem der vorhergehenden Ansprüche, wobei die Steuerungsvorrichtung (2) dazu ausgelegt ist, eine Steuerungsdatei für die alternative Funktionalität zu speichern und für das Übersetzen bereitzustellen.

7. Fertigungssystem nach Anspruch 6, wobei die Steuerungsvorrichtung (2) dazu ausgelegt ist, die alternative Funktionalität nur vorübergehend bereitzustellen.

8. Fertigungssystem nach Anspruch 7, wobei die Steuerungsvorrichtung (2) dazu ausgelegt ist, die alternative Funktionalität für eine vorbestimmte Zeitdauer bereitzustellen.

9. Fertigungssystem nach Anspruch 7, wobei die Steuerungsvorrichtung (2) dazu ausgelegt ist, die alternative Funktionalität für eine vorbestimmte Anzahl an Nutzzyklen bereitzustellen.

10. Verfahren zum Betreiben eines Fertigungssystems, welches eine Fertigungsmaschine (1) und eine Steuerungsvorrichtung (2) zum Erzeugen spezifischer Steuerungsbefehle für die Fertigungsmaschine (1) auf der Grundlage von Fertigungsdaten aufweist, durch
- Übersetzen der Fertigungsdaten in die spezifischen Steuerungsbefehle,
**gekennzeichnet durch**
- Entscheiden anhand eines vorgegebenen Qualitätskriteriums, ob eine in die Steuerungsvorrichtung (2) bereits integrierte, aktivierte Funktionalität zu dem Übersetzen der Fertigungsdaten in die spezifischen Steuerungsbefehle verwendet wird oder eine alternative Funktionalität, die in einer Datenbank außerhalb der Steuerungsvorrichtung oder in nicht aktivierter Form in der Steuerungsvorrichtung (2) bereitgestellt wird.
